Europäisches Patentamt

(19) European Patent Office

Office européen des brevets

(11) Publication number: **0 012 631**
**B1**

## EUROPEAN PATENT SPECIFICATION

(45) Date of publication of patent specification: **12.01.83**

(51) Int. Cl.³: **C 09 K 3/14, B 22 F 1/02**

(21) Application number: **79302947.1**

(22) Date of filing: **18.12.79**

(54) Coated abrasive pellets and method of making same.

(30) Priority: **18.12.78 ZA 787071**
**09.03.79 ZA 791100**

(43) Date of publication of application:
**25.06.80 Bulletin 80/13**

(45) Publication of the grant of the patent:
**12.01.83 Bulletin 83/2**

(84) Designated Contracting States:
**BE DE FR GB IT**

(56) References cited:
**FR - A - 1 574 515**
**US - A - 3 879 901**
**US - A - 3 929 432**
**US - E - 26 879**

**Ullmanns Encyklopädie der technischen Chemie,**
**4. Auflage, Band 12, Seite 515.**

(73) Proprietor: **DE BEERS INDUSTRIAL DIAMOND**
**DIVISION (PROPRIETARY) LIMITED**
**8th Floor 45 Main Street**
**Johannesburg Transvaal (ZA)**

(72) Inventor: **Tomlinson, Peter Noel**
**217 Calanbria Drive**
**Mondeor Transvaal (ZA)**

(74) Representative: **Ellis-Jones, Patrick George Armine**
**J.A. KEMP & CO. 14 South Square Gray's Inn**
**London WC1R 5EU (GB)**

Courier Press, Leamington Spa, England

Coated abrasive pellets and method of making same

This invention relates to coated superhard abrasive particles such as diamond and cubic boron nitride (CBN).

It has already been proposed to coat superhard abrasives with a metal which is capable of forming a chemical bond with the particles and alloys with a metal in a metal bond in which the particles are incorporated.

It has also already been proposed (See US—E—26 879) to form spherical pellets with diamonds at their cores and a green layer of a wolfram carbide-cobalt mixture around the core. In this proposal the pellets are compacted to form a metal bond diamond tool and the formed tool is subjected to sintering conditions in which the wolfram carbide-cobalt mixture sinters to hard metal.

Green pellets of the kind just referred to can be made to be self-sustaining, but not to the extent that they can be handled as articles of commerce. Also for a reasonable diamond concentration, the pellets have to be rather large, which worsens the handling problems. Of course, the metal bond is then a hard metal bond.

FR—A—1 574 515 discusses, in very general terms, the possibility of preparing, inter alia, over abrasive particles at least two layers, one of these being a metallic layer and the other a non-metallic layer. The technique which is described involves carburisation; the formation of the carburised layer is referred to as "sintering".

An object of the invention is to provide abrasive pellets with cores of super hard abrasive particles which can be used as articles of commerce.

In the context of the present invention super hard abrasive particles are natural diamond particles, synthetic diamond particles, cubic boron nitride particles resulting from the crushing of polycrystalline diamond and cubic boron nitride composites.

According to the invention an abrasive pellet comprises a core of a superhard abrasive particle with a metal forming a strong bond with the materials of the core and an outer sintered abrasive layer characterised in that the outer layer is a pelletized layer sintered to form a metal bonded abrasion resistant layer. The metal forming a chemical bond is usually a carbide forming transition metal such as Va, Ta, and preferably Ti.

The outer layer may be selected from: hard metals (including all cemented carbides, for example cobalt bonded tungsten carbide), metal bonded nitrides, metal bonded borides, metal bonded silicon carbide, metal bonded diamond powder, for example that in which the diamond power is in a size range of 10 to 100 $\mu$m especially 75 to 38 (200 to 400 US Standard mesh), metal bonded cubic boron nitride powder, for example that in which the powder is in a size range of 10 to 100 $\mu$m, and mixtures thereof.

Also according to the invention a method of making abrasive pellets by selecting superhard abrasive particles, coating the individual particles with a thin coating of a metal which is capable of forming or forms a strong bond with the particles and pelletizing the coated particles with a powder mixture capable of sintering to provide an abrasion resistant material characterised by sintering the pellets to form a metal bonded abrasion resistant layer on each particle.

Description of a Preferred Embodiment

Example 1

Metal bond diamond particles of sieve aperture 150 to 125 $\mu$m; (100/120 mesh) were mixed with titanium powder of sieve aperture 90 to 75 $\mu$m; (170/200 mesh) with the metal powder constituting about 70% by volume of the mixture. The mixture was then heated to a temperature of 700°C in a vacuum of $1.3 \times 10^{-2}$ Pa ($10^{-4}$ Torr) and maintained at this temperature for 30 minutes. When ambient temperature was restored, the vacuum was released. The mixture was then passed through an appropriate screen which trapped the coated diamond particles and allowed the finer titanium to pass through. The diamond particles were found each to have a titanium coating of about 0.5 $\mu$m.

The titanium coated particles were next placed in a pelletizer of the kind described in U.S.—E—26 879 and a mixture of wolfram carbide (73% by weight) and cobalt (27% by weight) fed to the pelletizer with the addition of alcohol and camphor. This was continued until green pellets of about 0.5 mm in diameter had been formed. The green pellets were first dried and then sintered under reducing conditions for 10 minutes at 1100°C.

The sintered product consisted of discrete, substantially spherical and extremely hard pellets.

A quantity of these pellets were mixed with a powdered bronze mixture used for making diamond impregnated cutting inserts for coring bits. The diamond concentration was about 80. The inserts were sintered under the usual conditions and then mounted on a coring bit. The bit was found to perform very well. It was found that the typical gouging of the metal bond which occurs at the leading edges of diamond particles in such inserts took place around the pellets rather than around the diamonds. Thus the diamond substance was available for drilling for a longer period than it would have been in the absence of the surrounding layer of hard metal.

## Example 2

Example 1 was repeated, but using CBN particles as the cores.

Once more spherical pellets of extreme hardness were formed.

## Example 3

A diamond compact was made according to the teachings of US—A—3 141 746 employing 97% diamond particles and 3% cobalt. The compact was broken up and crushed in apparatus used for crushing natural diamonds. The crushed particles were closely screened and particles of sieve aperture 150 to 125 $\mu$m (100/120 mesh) were taken for the next steps.

The particles were mixed with titanium powder of 170/200 mesh with the metal powder constituting about 70% by volume of the mixture. The latter was heated to a temperature of 700°C in a vacuum of $1.3 \times 10^{-2}$ Pa ($10^{-4}$ Torr) and maintained at this temperature for 30 minutes. After restoration of ambient temperature the vacuum was released. The mixture was then screened to retain the coated compact particles and to allow the finer titanium to pass through. Each coated particle had a titanium coating of about 0.5 $\mu$m.

The titanium coated particles were pelletized as in Example 1.

In this Example the extremely hard pellets were incorporated in a standard metal matrix used for making circular saw segments with a diamond concentration of about 80. The saw segments were found to perform very well.

## Example 4

Example 3 was repeated but using a CBN compact according to Example 1 of ZA—A—73/5447.

Once more saw segments were prepared. In this case the segments exhibited a great degree of thermal stability and even after considerable abuse still performed extremely well.

## Example 5

A powder mixture was prepared composed of one part by mass of sieve aperture 75 to 38 $\mu$m (200/400 mesh) diamond powder and one part by mass of 300 to 250 $\mu$m (50/60 mesh) CBN particles and 75 to 38 $\mu$m (200/400 mesh) CBN powder. Coated diamonds of sieve aperture 600 to 450 $\mu$m (30/40 mesh) were then pelletized with this mixture until pellets of about 2.5 mm in diameter were formed.

The green pellets were sintered at 900°C in a vacuum.

Sintered pellets were incorporated in a metal bonded grinding wheel and used with good effect for the rough grinding of various ferrous alloys.

## Example 6

The procedure of Example 1 was repeated except that 850 to 600 $\mu$m (20/30 mesh) diamond was used and that the powder mixture consisted in a 1:1 mixture by mass of $\geqslant$75 $\mu$m (200 mesh) iron powder and iron boride powder.

The green pellets were sintered at 900°C in a vacuum.

Very hard abrasive pellets were formed, but these have not yet been tried in any application.

## Example 7

Example 6 was repeated with 250 to 180 $\mu$m (60/80 mesh) CBN particles and a 1:1 mixture of $\geqslant$75 $\mu$m (200 mesh) silicon carbide powder and the Ag/Cu/Ti alloy of Example 1.

Once more very hard pellets were formed after sintering under reducing conditions at 1100°C.

In all cases nitriding of the outer layer could be achieved by sintering in a nitrogen atmosphere. When the outer layer comprises a metal which could form carbides, carbide formation could be achieved by adding graphite powder to the powder mixture prior to pelletizing.

Pellets containing diamond are usually used in abrasive tools with a metal bond or a resin bond. Pellets containing CBN could be used in a metal bond, vitreous bond and resin bond. To achieve good bonding between the pellets and a resin, light acid etching of the pellets is useful.

## Claims

1. An abrasive pellet comprising a core of a superhard particle with a metal forming a strong bond with the materials of the core and an outer sintered abrasive layer characterised in that the outer layer is a pelletized layer sintered to form a metal bonded abrasion resistant layer.

2. An abrasive pellet as claimed in claim 1 in which the metal forming a chemical bond is titanium.

3. An abrasive pellet as claimed in either of the above claims in which the superhard abrasive particle is selected from diamond, cubic boron nitride, crushed diamond composite and crushed cubic boron nitride composite.

4. An abrasive pellet as claimed in any one of the above claims in which the outer layer is selected from hard metals, metal bonded nitrides, metal bonded borides, metal bonded silicon carbide, metal bonded diamond powder, metal bonded cubic boron nitride powder, and mixtures thereof.

5. A method of making abrasive pellets by selecting superhard abrasive particles, coating the individual particles with a thin coating of a metal which is capable of forming or forms a strong bond with the particles and pelletizing the coated particles with a powder mixture capable of sintering to provide an abrasion resistant material characterised by sintering the pellets to form a metal bonded abrasion resistant layer on each particle.

## Revendications

1. Pastille abrasive comprenant une âme d'une particule superdure avec un métal formant une liaison solide avec les matières de l'âme et une couche abrasive frittée extérieure, caractérisée en ce que la couche extérieure est une couche pastillée, frittée pour former une couche résistant à l'abrasion, liée par un métal.

2. Pastille abrasive selon la revendication 1 dans laquelle le métal formant une liaison chimique est le titane.

3. Pastille abrasive selon l'une des revendications ci-dessus, dans laquelle la particule abrasive superdure est choisie parmi le diamant, du nitrure de bore cubique, un composite de diamant broyé et un composite de nitrure de bore cubique broyé.

4. Pastille abrasive selon l'une quelconque des revendications précédentes, dans laquelle la couche extérieure est choisie parmi des métaux durs, des nitrures liés par un métal, des borures liés par un métal, du carbure de silicium lié par un métal, de la poudre de diamant liée par un métal, de la poudre de nitrure de bore cubique liée par un métal, et des mélanges de ces matières.

5. Procédé de production de pastilles abrasives par sélection de particules abrasives superdures, enduction des particules individuelles avec un mince revêtement d'un métal qui est capable de former ou qui forme une liaison solide avec les particules, et pastillage des particules revêtues avec un mélange poudreux capable d'un frittage pour produire une matière résistant à l'abrasion, caractérisé par un frittage des pastilles pour former une couche résistant à l'abrasion, liée par un métal, sur chaque particule.

## Patentansprüche

1. Schleifpellet mit einem Kern aus einem superharten Teilchen mit einem Metall, welches mit den Kernmaterialien eine starke Bindung ausbildet, und mit einer äußeren, gesinterten Schleifschicht, dadurch gekennzeichnet, daß die äußere Schicht eine pelletierte Schicht ist, die zur Ausbildung einer metallgebundenen, abriebsfesten Schicht gesintert ist.

2. Schleifpellet nach Anspruch 1, bei dem das eine chemische Bindung ausbildende Metall Titan ist.

3. Schleifpellet nach einem der beiden obigen Ansprüche, bei dem das superharte Schleifteilchen Diamant, kubisches Bornitrid, zerkleinerter Diamant-Verbundstoff oder zerkleinerter kubisches-Bornitrid-Verbundstoff ist.

4. Schleifpellet nach einem der obigen Ansprüche, bei dem die äußere Schicht aus Hartmetall, metallgebundenem Nitrid, metallgebundenem Borid, metallgebundenem Siliziumcarbid, metallgebundenem Diamantpulver, metallgebundenem kubischem Bornitridpulver oder aus Mischungen hiervon ist.

5. Verfahren zum Herstellen von Schleifpellets durch Auswählen superharter Schleifteilchen, Beschichten der einzelnen Teilchen mit einem dünnen Überzug aus einem Metall, welches zur Ausbildung einer starken Bindung mit den Teilchen befähigt ist oder eine solche Bindung ausbildet, und Pelletieren der beschichteten Teilchen mit einer Pulvermischung, die zur Erzielung eines abriebfesten Materials sinterbar ist, gekennzeichnet durch Sintern der Pellets zur Ausbildung einer metallgebundenen, abriebsfesten Schicht auf jedem Teilchen.